# EUROPÄISCHE PATENTANMELDUNG

(11) **EP 3 473 911 A1**
(43) Veröffentlichungstag der Anmeldung: **24.04.2019**
(21) Anmeldenummer: 18200986.0
(22) Anmeldetag: 17.10.2018
(51) Int. Cl.: F16L 11/15, F16L 13/02, F16L 13/14, F16L 13/16, F16L 27/10, F16L 27/11

(54) **FLUIDLEITUNG UND VERFAHREN ZUM HERSTELLEN EINER FLUIDLEITUNG**

(30) Priorität: 17.10.2017 DE 102017124166
(71) Anmelder: BOA Balg- und Kompensatoren-Technologie GmbH, 76297 Stutensee (DE)
(72) Erfinder: TELATINSKI, Jürgen, 76297 Stutensee (DE)
(74) Vertreter: DREISS Patentanwälte PartG mbB

(57) **Zusammenfassung**

Eine Fluidleitung (10) mit einem fluidführenden Leitungselement (12) und mindestens einem fluidführenden, vorzugsweise koaxial zum Leitungselement ausgerichteten Anschlusselement (14), wobei das Leitungselement (12) ein Ende (16) aufweist, zu dem das Anschlusselement (14) axial benachbart ist oder an dem sich das Leitungselement (12) und das Anschlusselement (14) axial überlappen, ist im Hinblick darauf, mit einfachen konstruktiven Mitteln eine zuverlässige und stabile Fluidleitung bereitzustellen, derart ausgestaltet und weitergebildet, dass das Leitungselement (12) an dem einen Ende (16) durch einen mittels gepulster Magnetfelder beaufschlagten Umformer (18) derart umgeformt ist, dass das Leitungselement (12) und das Anschlusselement (14) an dem einen Ende (16) formschlüssig und/oder stoffschlüssig verbunden sind.

Ein Verfahren zum Herstellen einer Fluidleitung ist angegeben.

## Beschreibung

Die Erfindung betrifft eine Fluidleitung mit einem fluidführenden Leitungselement und einem fluidführenden, vorzugsweise koaxial zum Leitungselement ausgerichteten Anschlusselement, wobei das Leitungselement ein Ende aufweist, zu dem das Anschlusselement axial benachbart ist oder an dem sich das Leitungselement und das Anschlusselement axial überlappen. Zudem betrifft die Erfindung ein Verfahren zur Herstellung einer Fluidleitung, mit folgenden Schritten: Bereitstellen eines fluidführenden Leitungselements und eines fluidführenden Anschlusselements, Ausrichten, insbesondere koaxiales Ausrichten, des Leitungselements und des Anschlusselements, wobei das Anschlusselement zu einem Ende des Leitungselements benachbart ist oder sich das Anschlusselement und das Leitungselement an dem einen Ende axial überlappen.

Fluidleitungen und Verfahren zum Herstellen einer Fluidleitung sind aus dem Stand der Technik bekannt, bspw. aus der DE 20 2010 002 866 U1, die ein Entkopplungselement beschreibt, bei dem ein Balg mit einem Agraff herkömmlich verschweißt wird (durch Schweißpunkte oder Schweißnaht). Damit ist ein konventionelles Entkopplungselement geschaffen. Allerdings ist problematisch, dass die aufgrund der Verschweißung entstehende Schweißnaht oder die Schweißpunkte die Bauteilstruktur schwächen und hinsichtlich des Kraftflusses am Bauteil konstruktiv berücksichtigt werden müssen. Zudem entstehen durch den Temperatureintrag beim Schweißen Spannungen und Verzug. Auch dies muss konstruktiv berücksichtigt werden.

Der Erfindung liegt die Aufgabe zugrunde, mit einfachen konstruktiven Mitteln eine zuverlässige und stabile Fluidleitung bereitzustellen.

Die Erfindung löst diese Aufgabe durch eine Fluidverbindung mit den Merkmalen des Anspruchs 1. Danach zeichnet sich die Fluidverbindung insbesondere dadurch aus, dass das Leitungselement an dem einen Ende durch einen mittels gepulster Magnetfelder beaufschlagten Umformer (elektrisch leitfähig) derart umgeformt ist, dass das Leitungselement und das Anschlussstück an dem einen Ende formschlüssig und/oder stoffschlüssig verbunden sind, insbesondere dicht oder fluiddicht. Die Fluidleitung ist insbesondere durch ein Verfahren gemäß dem nebengeordneten Anspruch hergestellt. Mit anderen Worten werden die zu verbindenden Teile, bspw. Leitungselement, Anschlusselement und/oder Umformer, gegenseitig beschleunigt und zum Aufprall gebracht, so dass sich zwischen den zu verbindenden Teilen eine formschlüssige und/oder stoffschlüssige Verbindung ausbildet.

Die Verbindung von Leitungselement und Anschlusselement erfolgt mithilfe des Verfahrens der Magnetumformung (elektromagnetische Umformung), wobei das Leitungselement mittels eines Umformers, auf den ein gepulstes Magnetfeld wirkt und der dadurch berührungslos verlagert und/oder umgeformt wird, kaltumgeformt wird (Kaltumformung). Diese Kaltumformung erfolgt derart, dass das Leitungselement mit dem Anschlusselement zumindest formschlüssig verbunden wird, da sich das Leitungselement an die Kontur des Anschlusselements anlegt oder anschmiegt.

Auch eine stoffschlüssige oder form- und stoffschlüssige Verbindung lässt sich so realisieren: Bei dieser Variante (Fügevorgang durch elektromagnetisches Pulsschweißen) werden das Leitungselement und das Anschlusselement mit sehr hoher Geschwindigkeit (ca. 100 m/s) aufeinander gebracht. Das Leitungselement und das Anschlusselement sind somit kaltverschweißt. Die Kollisionsenergie bringt das Leitungselement und das Anschlusselement (Schweißpartner) im Verbindungsbereich bis zur atomaren Ebene zusammen, so dass bspw. bei Metallen Gitterkräfte wirken. Durch die Kaltverschweißung erfolgt kein Eintrag von Wärmeenergie, so dass ungewünschte Spannungen oder Verzug nicht auftreten. Die Verbindung von Anschlusselement und Leitungselement ist schweißstellenfrei (keine Schweißnähte oder Schweißpunkte). Dies begünstigt den Kraftfluss im Verbindungsbereich.

Der Umformer kann sowohl bei der Magnetumformung als auch beim elektromagnetischen Pulsschweißen an der Fluidleitung, d.h. am Anschlusselement und/oder am Leitungselement, verbleiben oder abnehmbar ausgebildet sein, bspw. teilbar, und insbesondere nach Verbindung von Anschlusselement und Leitungselement von der Fluidleitung abgenommen werden. Insbesondere dann, wenn der Umformer derart eingerichtet ist, dass dieser bei der Beaufschlagung mit einem gepulsten Magnetfeld selbst verformt oder umgeformt wird, kann der (dann umgeformte) Umformer an der Fluidleitung verbleiben.

Die Fluidleitung dient insbesondere zur Führung von Gasen und/oder Flüssigkeiten. Das Leitungselement und/oder das Anschlusselement können sich entlang einer Axialrichtung erstrecken, wobei diese geradlinig verlaufen oder auch gebogen, gekrümmt oder abgewinkelt ausgebildet sein kann. Der Begriff "fluidführend" ist dahingehend zu verstehen, dass das Leitungselement und/oder das Anschlusselement zur Fluidführung geeignet sind (tatsächliche Anwesenheit eines Fluids wird nicht gefordert). Die Fluidleitung kann eine C02-Leitung, einen Solarverbinder (Führung von Kältemittel) oder ein Entkopplungselement, insbesondere für einen Abgasstrang eines Verbrennungsmotors, bilden.
Im Konkreten kann das Leitungselement zumindest abschnittsweise gewellt ausgebildet sein. Mit anderen Worten kann das Leitungselement einen Balg oder einen Wellschlauch aufweisen oder zumindest abschnittsweise als Balg oder Wellschlauch ausgebildet sein. Somit kann das Leitungselement Schwingungen und Bewegungen aufnehmen oder ausgleichen.

Im Rahmen einer bevorzugten Ausgestaltung kann sich das Anschlusselement an seinem dem Leitungselement zugewandten Ende zu diesem Ende hin insbesondere konisch verjüngen und/oder das Anschlusselement kann an seiner Außenfläche eine oder mehrere, insbesondere umlaufende, Vertiefungen aufweisen. Durch die insbesondere konische Verjüngung am Ende sind ein axiales Überlappen sowie ein Formschluss zwischen Leitungselement und Anschlusselement begünstigt. Bei Realisieren einer Schweißverbindung (Pulsschweißen) kann an der Verjüngung eine stoffschlüssige Fügezone ausgebildet sein. In der Vertiefung, die bspw. als Nut ausgebildet sein kann, kann ein Dichtelement angeordnet sein, bspw. ein Dichtring oder O-Ring. Zudem kann an der Außenfläche des Anschlusselements eine weitere Vertiefung ausgebildet sein, in die das Leitungselement eingreift, so dass eine formschlüssige Verbindung entsteht.
In zweckmäßiger Weise kann das Anschlusselement aus Gusseisen mit Kugelgrafit (GJS), Stahl, Stahlguss, Nichteisenmetall, rostfreiem Stahl (Edelstahl), Aluminium oder Kunststoff ausgebildet sein und/oder das Leitungselement kann aus rostfreiem Stahl (Edelstahl), Aluminium oder Nichteisenmetall ausgebildet sein und/oder der Umformer kann aus Aluminium, Kupfer oder Stahl ausgebildet sein. Hiermit lässt sich eine hinreichend stabile Fluidleitung mit geeigneten Fügepartnern realisieren (Werkstoffpaarungen von Anschlusselement, Leitungselement und/oder Umformer).

Gemäß einer möglichen Ausgestaltung können das Anschlusselement und das Leitungselement an den einander zugewandten Enden jeweils einen sich insbesondere flanschartig nach radial außen erstreckenden Endabschnitt aufweisen, insbesondere wobei das Anschlusselement und das Leitungselement an den Endabschnitten stoffschlüssig miteinander verbunden sind, insbesondere an Stirnflächen der Endabschnitte. Damit kann eine flächige, insbesondere flanschartige, Anbindung zwischen Anschlusselement und Leitungselement geschaffen werden. Das Anschlusselement und das Leitungselement können einen in etwa gleichen Innendurchmesser und/oder eine in etwa gleiche Wandstärke aufweisen.

In vorteilhafter Weise kann der Umformer das Leitungselement und das Anschlusselement an dem einen Ende zumindest teilweise nach radial außen umgeben, und zwar derart, dass das Leitungselement und das Anschlusselement mittels des Umformers aneinander befestigt sind. Damit lässt sich eine stabile formschlüssige und/oder stoffschlüssige, dichte oder fluiddichte Verbindung von Leitungselement, Anschlusselement und Umformer schaffen. Der Umformer ist Fügepartner und kann an der Fluidleitung verbleiben. Auf Grund der Beaufschlagung mittels gepulsten Magnetfeldern ist/wird der Umformer selbst ebenfalls umgeformt (Wirkung nach radial innen). Mit anderen Worten dient der Umformer als Treiberelement, insbesondere als Treiberring, der sich infolge der Beaufschlagung mittels gepulster Magnetfelder nach radial innen umformt (komprimiert) und bei dieser Umformung das Leitungselement gegen das Anschlusselement verformt oder "treibt". Der Umformer kann im umgeformten Zustand einen hülsenförmigen, V-förmigen oder U-förmigen Querschnitt aufweisen.

Im Konkreten kann das Leitungselement als Rohrleitung oder als Balg ausgebildet sein und/oder das Anschlusselement kann als Anschlussteil, Anschlussende oder als Rohrleitung ausgebildet sein.

In vorteilhafter Weise kann das Leitungselement das Anschlusselement, insbesondere zumindest in einem axialen Abschnitt, nach radial außen umgeben und/oder der Umformer kann axial oder radial auf das Leitungselement wirken.

Die eingangs genannte Aufgabe wird auch durch ein Verfahren mit den Merkmalen des nebengeordneten Anspruchs gelöst. Danach zeichnet sich das Verfahren aus durch Bereitstellen eines Umformers und Beaufschlagen des Umformers mittels gepulster Magnetfelder, so dass das Leitungselement oder das Anschlusselement derart verlagert wird und/oder das Leitungselement an seinem einen Ende derart umgeformt wird, dass das Leitungselement und das Anschlusselement formschlüssig und/oder stoffschlüssig verbunden werden. Hinsichtlich der damit erzielbaren Vorteile sei auf die Ausführungen zu Anspruch 1 verwiesen.

Wie oben beschrieben, kann der Umformer das Leitungselement und/oder das Anschlusselement nach radial außen umgeben und beim Beaufschlagen mittels gepulster Magnetfelder radial derart umgeformt oder komprimiert werden, dass das Leitungselement und das Anschlusselement formschlüssig und/oder stoffschlüssig miteinander verbunden werden. Damit lässt sich eine stabile formschlüssige und/oder stoffschlüssige Verbindung schaffen. Zur Vermeidung von Wiederholungen wird auf obige Ausführungen verwiesen.

Alternativ hierzu kann der Umformer das Leitungselement und/oder das Anschlusselement nach radial außen umgeben und beim Beaufschlagen mittels gepulster Magnetfelder axial derart verlagert werden, dass das Leitungselement und das Anschlusselement an ihren einander zugewandten Enden derart in Kontakt oder in axiale Überlappung gebracht werden, dass das Leitungselement und das Anschlusselement formschlüssig oder stoffschlüssig miteinander verbunden werden. Mit anderen Worten wirkt der Umformer als Beschleuniger, der beim Beaufschlagen mittels gepulster Magnetfelder axial beschleunigt und verlagert wird, wodurch das Leitungselement und das Anschlusselement aufeinander zu bewegt werden und infolge der Kollisionsenergie im Verbindungsbereich formschlüssig und/oder stoffschlüssig verbunden werden. Der Umformer kann nach dem Fügevorgang von der Fluidleitung abgenommen werden und somit nur gezielt für den Fügevorgang angebracht werden.

Im Konkreten kann der Umformer das Leitungselement oder das Anschlusselement umgreifen, insbesondere hintergreifen, und bei der axialen Verlagerung des Umformers mitnehmen, so dass das Anschlusselement und das Leitungselement axial (schlagartig) miteinander in Kontakt gebracht oder aufeinander geschoben werden. Dabei wird das Leitungselement oder das Anschlusselement durch den Umformer bewegt, wobei die unbewegte Komponente durch eine Abstützung oder Fixierung axial und/oder radial fixiert sein kann. Der Umformer kann radial nach innen abragende Abschnitte aufweisen, mit denen der Umformer das Leitungselement oder das Anschlusselement umgreift oder hintergreift und dadurch bei dessen Verlagerung mitnehmen kann (Umgriffs- oder Hintergriffsabschnitte).

Bspw. kann bei Vorhandensein von Balgabschnitten am Leitungselement der Umformer mittels Hintergriffsabschnitten eine Wellung des Balgs hintergreifen und bei Verlagerung des Umformers das Leitungselement über das Anschlusselement bewegen oder "ziehen". Zur weiteren Ausgestaltung des Verfahrens können auch die im Zusammenhang mit der Fluidleitung beschriebenen Maßnahmen dienen.

Die Erfindung wird im Folgenden anhand der Figuren näher erläutert, wobei gleiche oder funktional gleiche Elemente ggf. lediglich einmal mit Bezugszeichen versehen sind. Die Figuren umfassen jeweils eine ggf. teilweise geschnittene Hauptansicht und eine oder mehrere mit Großbuchstaben gekennzeichnete Teilansichten. Es zeigen:
- Fig.1: eine Ausführungsform einer Fluidleitung, wobei Leitungselement und Anschlusselement noch nicht verbunden sind;
- Fig.2: die Fluidleitung aus Fig.1, wobei Leitungselement und Anschlusselement verbunden sind;
- Fig.3: eine weitere Ausführungsform einer Fluidleitung, wobei das Anschlusselement und das Leitungselement unverbunden (Darstellung C) und verbunden dargestellt sind (Darstellung B);
- Fig.4: weitere Ausführungsformen einer Fluidleitung, wobei Leitungselement und Anschlusselemente noch nicht verbunden sind;
- Fig.5: die Fluidleitung aus Fig.4, wobei Leitungselement und Anschlusselemente verbunden sind;
- Fig.6: eine weitere Ausführungsform einer Fluidleitung, wobei das Anschlusselement und das Leitungselement unverbunden (Darstellung I) und verbunden dargestellt sind (Darstellung J); und
- Fig.7: eine weitere Ausführungsform einer Fluidleitung, wobei das Anschlusselement und das Leitungselement unverbunden (Darstellung K) und verbunden dargestellt sind (Darstellung L).

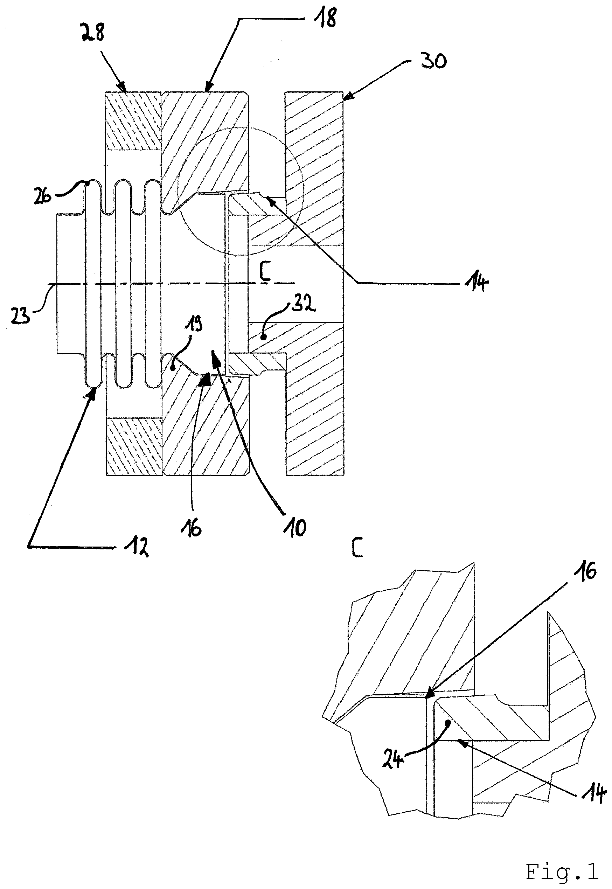

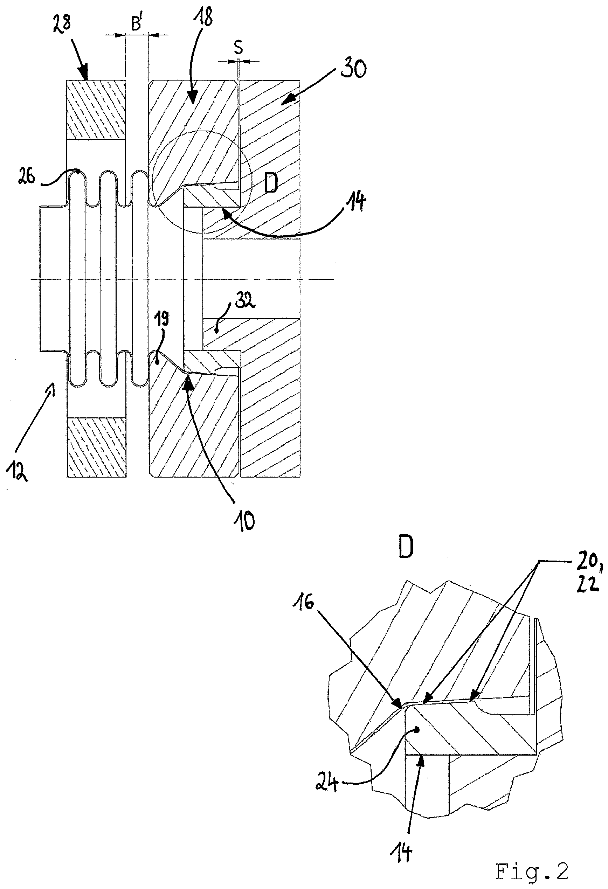

Die Figuren 1 und 2 zeigen eine Fluidleitung 10 zur Führung von Gasen und/oder Flüssigkeiten mit einem fluidführenden Leitungselement 12 und einem fluidführenden und koaxial zum Leitungselement 12 ausgerichteten Anschlusselement 14 (in Figur 1 im unverbundenen Zustand dargestellt). Das Leitungselement 12 weist ein Ende 16 auf (Balganschlussende), an dem sich das Leitungselement 12 und das Anschlusselement 14 im verbundenen Zustand axial überlappen (siehe Figur 2).

Das Leitungselement 12 ist durch einen mittels gepulster Magnetfelder beaufschlagten Umformer 18 verlagert und dabei an dem einen Ende 16 derart umgeformt, dass das Leitungselement 12 und das Anschlusselement 14 an dem einen Ende 16 stoffschlüssig miteinander verbunden sind (siehe Figur 2). In dem Bereich, in dem sich das Leitungselement 12 und das Anschlusselement 14 axial überlappen (überlappender Bereich 20), ist eine stoffschlüssige Fügezone 22 ausgebildet. In der Fügezone 22 sind das Leitungselement 12 und das Anschlusselement 14 flächig miteinander verbunden (kaltverschweißt). Diese flächige, dichte oder fluiddichte Verbindung ist frei von gefügeverändernden Wärmeeinflusszonen (keine Schweißnaht und keine Schweißpunkte). Im überlappenden Bereich 20 umgibt das Leitungselement 12 das Anschlusselement 14 nach radial außen. Der Umformer 18 wirkt axial auf das Leitungselement 12 (entlang der Axialrichtung 23). Der Umformer 18 weist Hintergriffsabschnitte 19 auf.

Das Anschlusselement 14 ist an seinem dem Leitungselement 12 zugewandten Ende 24 zum Ende 24 hin konisch verjüngt (siehe Figur 1 Darstellung C oder Figur 2 Darstellung D). Die Fügezone 22 befindet sich in diesem konisch verjüngten Bereich. Das Leitungselement 12 ist zumindest abschnittsweise gewellt ausgebildet und weist Balgwellungen 26 auf. Das Leitungselement 12 erstreckt sich rohrförmig entlang der Axialrichtung 23 und ist als Balg ausgebildet. Das Anschlusselement 14 erstreckt sich ebenfalls rohrförmig und ist als Anschlussende ausgebildet. Die Fluidleitung 10 bildet einen Balg 12 mit Anschlussstück 14 aus.

In Figur 1 und 2 sind neben dem Umformer 18 noch ein Spulenkörper 28 und eine Abstützung 30 dargestellt. Der Spulenkörper 28 und die Abstützung 30 sind ortsfest montiert, bspw. an einem Maschinenbett fixiert. Der Spulenkörper 28 kann bestromt werden und dient zur Beaufschlagung des Umformers 18 mit gepulsten Magnetfeldern, wodurch der Umformer 18 axial verlagert wird. Die Abstützung 30 weist einen axial erhabenen Halteabschnitt 32 auf, auf dem das Anschlusselement 14 sitzt.

Das Verfahren zur Herstellung der Fluidleitung 10 läuft folgendermaßen ab: Zunächst werden ein fluidführendes Leitungselement 12 und ein fluidführendes Anschlusselement 14 bereitgestellt (siehe Figur 1). Danach erfolgt ein koaxiales Ausrichten des Leitungselements 12 und des Anschlusselements 14, wobei das Anschlusselement 14 und das Leitungselement 12 an dem einen Ende 16 des Leitungselements 12 zunächst axial benachbart sind.

Anschließend wird der Umformer 18 bereitgestellt und mittels gepulster Magnetfelder beaufschlagt (nicht dargestellt), wodurch das Leitungselement 12 mittels des Umformers 18 verlagert und an seinem einen Ende 16 umgeformt wird, so dass das Leitungselement 12 und das Anschlusselement 14 stoffschlüssig miteinander verbunden werden (siehe Figur 2).

Der Umformer 18 umgibt das Leitungselement 12 und das Anschlusselement 14 axial zumindest abschnittsweise und wird beim Beaufschlagen mittels gepulster Magnetfelder axial derart verlagert, dass das Leitungselement 12 und das Anschlusselement 14 an ihren einander zugewandten Enden 16, 24 in axiale Überlappung gebracht werden, wobei das Leitungselement 12 an seinem Ende 16 umgeformt wird.

Der Umformer 18 hintergreift mit Hintergriffsabschnitten 19 das Leitungselement 12 an einem der Balgwellungen 26 und nimmt bei der axialen Verlagerung des Umformers 18 das Leitungselement 12 mit, so dass das Leitungselement 12 mit seinem Ende 16 auf das Anschlusselement 14 aufgeschoben wird. Durch die Kollisionsenergie werden das Leitungselement 12 und das Anschlusselement 14 in der Fügezone 22 (konischer Bereich) kaltverschweißt.

Durch Beaufschlagen des Umformers 18 mit gepulsten Magnetfeldern mittels des Spulenkörpers 28 wird der Umformer 18 axial um den Verlagerungsweg B' vom Spulenkörper 28 weg verlagert. Zwischen Umformer 18 und Abstützung 30 verbleibt ein Spalt S. Dieser Spalt S stellt sicher, dass die Kollisionsenergie tatsächlich im Fügebereich 22 frei wird und somit eine reproduzierbare zuverlässige Verbindung entsteht.

Der Umformer 18 wirkt hier als Beschleuniger, der bei seiner Verlagerung nicht oder nur vernachlässigbar verformt wird. Der Umformer 18 ist als teilbarer Ring ausgebildet (Beschleunigerring), der für den Fügevorgang auf das Leitungselement 12 montiert und nach dem Fügevorgang vom Leitungselement 12 abgenommen wird.

Der Umformer 18 ist Teil einer Anordnung zur Herstellung der Fluidleitung, wobei die Anordnung den Umformer 18, den Spulenkörper 28 und die Abstützung 30 umfasst. Zudem kann der Spulenkörper einen Feldformer umfassen (nicht dargestellt).

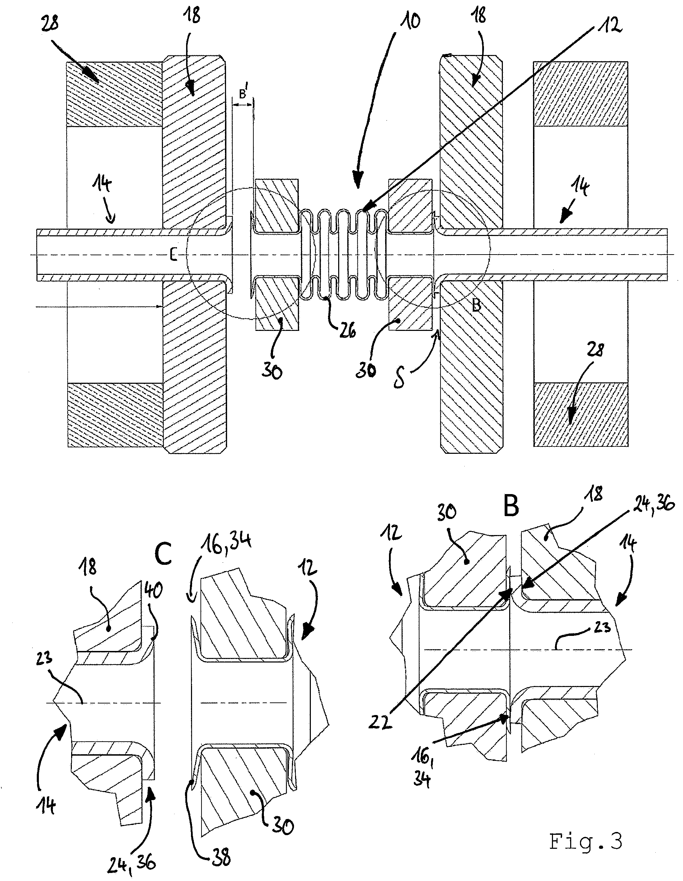

Figur 3 zeigt eine Ausgestaltungsmöglichkeit der Fluidleitung 10, die weitgehend der voranstehend beschriebenen Fluidleitung 10 entspricht. In Figur 3 ist die Fluidleitung 10 im unverbundenen Zustand (Darstellung C) und im verbundenen Zustand (Darstellung B) gezeigt.

Die Fluidleitung 10 weist eine fluidführendes Leitungselement 12 und ein fluidführendes und koaxial ausgerichtetes Anschlusselement 14 auf. Das Leitungselement 12 weist ein Ende 16 auf, zu dem das Anschlusselement 14 axial benachbart ist.
Das Leitungselement 12 ist durch einen mittels gepulster Magnetfelder beaufschlagten Umformer 18 an dem einen Ende 16 derart umgeformt, dass das Leitungselement 12 und das Anschlusselement 14 an dem einen Ende 16 stoffschlüssig miteinander verbunden sind (siehe Darstellung B).

Das Leitungselement 12 und das Anschlusselement 14 weisen an den einander zugewandten Enden 16, 24 jeweils einen sich flanschartig nach radial außen erstreckenden Endabschnitt 34, 36 auf. Das Leitungselement 12 und das Anschlusselement 14 sind an den axialen Stirnflächen 38, 40 der Endabschnitte 34, 36 stoffschlüssig miteinander verbunden (stoffschlüssige flächige Anbindung; siehe Darstellung B). Das Leitungselement 12 und das Anschlusselement 14 sind an den axialen Stirnflächen 38, 40 kaltverschweißt (Fügezone 22) .

Das Leitungselement 12 ist zumindest abschnittsweise gewellt ausgebildet und weist Balgwellungen 26 auf. Das Leitungselement 12 erstreckt sich rohrförmig entlang der Axialrichtung 23 und ist als Balg oder Wellschlauch ausgebildet. Das Anschlusselement 14 erstreckt sich ebenfalls rohrförmig und ist als Rohrleitung ausgebildet. Die Fluidleitung 10 kann z.B. eine CO2-Leitung ausbilden. Das Anschlusselement kann bspw. einen Außendurchmesser von 8 mm (Millimeter) und einen Innendurchmesser von 6 mm aufweisen.
In Figur 3 sind zudem ein Spulenkörper 28 und eine Abstützung 30 gezeigt. Der Spulenkörper 28 und die Abstützung 30 sind ortsfest montiert, bspw. auf einem Maschinenbett fixiert.

Bei der Herstellung der Fluidleitung 10 werden zunächst ein fluidführendes Leitungselement 12 und ein fluidführendes Anschlusselement 14 bereitgestellt und koaxial zueinander ausgerichtet. Das Anschlusselement 14 ist zu einem Ende 16 des Leitungselements 12 benachbart (Endabschnitte 34, 36 sind einander zugewandt).

Anschließend wird der Umformer 18 mittels gepulster Magnetfelder beaufschlagt (nicht dargestellt), wodurch mittels des Umformers 18 das Anschlusselement 14 verlagert und das Leitungselement 12 an seinem einen Ende 16 umgeformt wird, so dass das Leitungselement 12 und das Anschlusselement 14 stoffschlüssig miteinander verbunden werden (Darstellung B).

Durch Beaufschlagen des Umformers 18 mit gepulsten Magnetfeldern mittels des Spulenkörpers 28 wird der Umformer 18 axial um den Verlagerungsweg B' vom Spulenkörper 28 weg verlagert. Dabei nimmt der Umformer 18, der als Beschleuniger wirkt (teilbarer Beschleunigerring), das Anschlusselement 14 mit, so dass dieses mit dem Endabschnitt 36 auf den Endabschnitt 34 des Leitungselements 12 prallt. Dadurch werden die Endabschnitte 34, 36 an den Stirnflächen 38, 40 durch die Kollisionsenergie kaltverschweißt. Zwischen Umformer 18 und Abstützung 30 verbleibt ein Spalt S. Der Umformer 18 kann nach dem Fügevorgang vom Anschlusselement 14 entnommen werden.

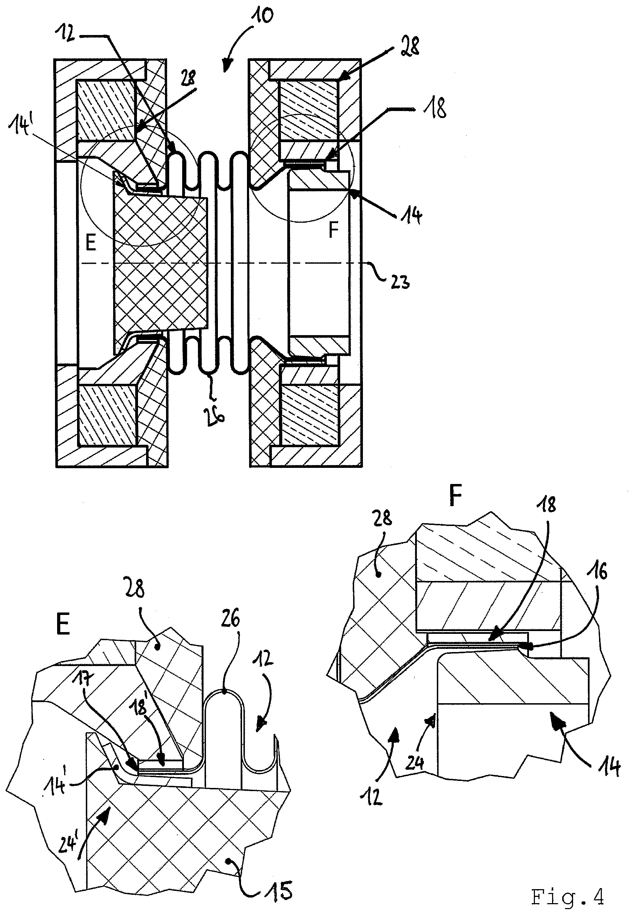

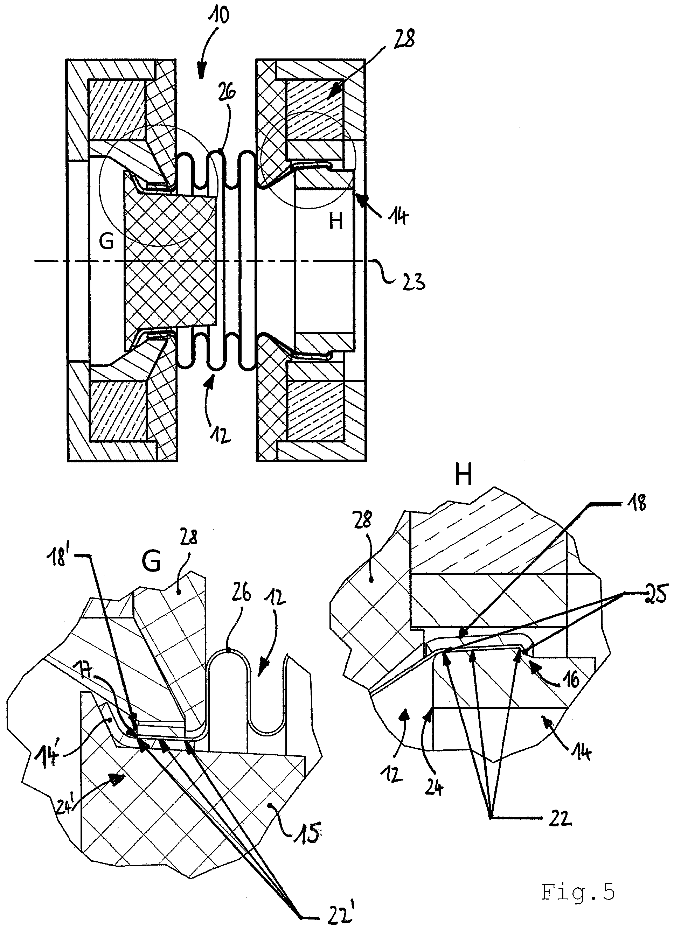

Die Figuren 4 und 5 zeigen eine weitere Ausgestaltungsmöglichkeit der Fluidleitung 10, wobei die Fluidleitung 10 im unverbundenen Zustand (Figur 4) und im verbundenen Zustand gezeigt ist (Figur 5).

Die Fluidleitung 10 weist ein fluidführendes Leitungselement 12 und ein fluidführendes und koaxial zum Leitungselement 12 ausgerichtetes Anschlusselement 14 auf. Das Leitungselement 12 weist ein Ende 16 auf, an dem sich das Leitungselement 12 und das Anschlusselement 14 axial überlappen (siehe Figur 4 Darstellung F und Figur 5 Darstellung H).

Das Leitungselement 12 ist an dem einen Ende 16 durch einen mittels gepulster Magnetfelder beaufschlagten Umformer 18 derart umgeformt, dass das Leitungselement 12 und das Anschlusselement 14 an dem einen Ende 16 formschlüssig und stoffschlüssig verbunden sind (siehe Figur 5 Darstellung H) .

In dem Bereich, in dem sich das Leitungselement 12 und das Anschlusselement 14 axial überlappen (überlappender Bereich), umgibt der Umformer 18 das Leitungselement 12 und das Anschlusselement 14 nach radial außen. Beim Beaufschlagen mittels gepulster Magnetfelder wird der Umformer 18 radial derart komprimiert, dass das Leitungselement 12 und das Anschlusselement 14 formschlüssig und stoffschlüssig miteinander verbunden werden. Dabei bildet sich zwischen Leitungselement 12 und Anschlusselement 14 im überlappenden Bereich eine stoffschlüssige Fügezone 22 sowie durch ein Anschmiegen des Leitungselements 12 und des Umformers 18 an die Kontur des Anschlusselements 14 auch ein Formschluss 25 aus.

Der Umformer 18 ist als ringförmiges Treiberelement (Treiberring) ausgebildet, der sich bei Beaufschlagen mittels gepulster Magnetfelder selbst verformt, nämlich komprimiert. Der Umformer 18 ist somit Fügepartner und kann an der Fluidleitung verbleiben.

Das Anschlusselement 14 ist an seinem dem Leitungselement 12 zugewandten Ende 24 zum Ende 24 hin konisch verjüngt (siehe Figur 4 Darstellung F oder Figur 5 Darstellung H). Die Fügezone 22 befindet sich in diesem konisch verjüngten Bereich. Das Leitungselement 12 ist zumindest abschnittsweise gewellt ausgebildet und weist Balgwellungen 26 auf. Das Anschlusselement 14 ist an seinem dem Leitungselement 12 zugewandten Ende 24 zum Ende 24 hin konisch verjüngt.

Das Leitungselement 12 erstreckt sich rohrförmig entlang der Axialrichtung 23 und ist als Balg oder Rohrleitung ausgebildet. Das Anschlusselement 14 erstreckt sich ebenfalls rohrförmig und ist als Anschlussteil ausgebildet. Die Fluidleitung 10 bildet einen Balg 12 mit Anschlussstück 14 aus.

Die Fluidleitung 10 weist ein weiteres Anschlusselement 14' auf, welches koaxial zum Leitungselement 12 ausgerichtet ist. Das Anschlusselement 14' ist an einem zweiten Ende 17 des Leitungselements 12 angeordnet, wobei sich das Leitungselement 12 und das Anschlusselement 14' axial überlappen (siehe Figur 4 Darstellung E und Figur 5 Darstellung G). Das Anschlusselement 14' wird durch eine Abstützung 15 gehalten.

Das Leitungselement 12 ist an dem zweiten Ende 17 durch einen mittels gepulster Magnetfelder beaufschlagten Umformer 18' derart umgeformt, dass das Leitungselement 12 und das Anschlusselement 14' an dem zweiten Ende 17 stoffschlüssig miteinander verbunden sind. Dabei bildet sich zwischen dem zweiten Ende 17 des Leitungselements 12 und dem Anschlusselement 14' eine stoffschlüssige Fügezone 22' aus. Auch der Umformer 18' ist als ringförmiges Treiberelement (Treiberring) ausgebildet der sich bei Beaufschlagen mittels gepulster Magnetfelder selbst verformt, nämlich komprimiert, und als Fügepartner an der Fluidleitung 10 verbleiben kann.

Das Anschlusselement 14' ist an seinem Ende 24' konisch verjüngt (siehe Figur 4 Darstellung E oder Figur 5 Darstellung G). Die Fügezone 22' befindet sich in diesem konisch verjüngten Bereich. Das weitere Anschlusselement 14' ist als Strömungselement ausgebildet, bspw. als Liner. In den Figuren 4 und 5 ist zudem ein Spulenkörper 28 mit Feldformer dargestellt.

Das Verfahren zur Herstellung der Fluidleitung 10 läuft folgendermaßen ab:
Zunächst werden ein fluidführendes Leitungselement 12 und ein fluidführendes Anschlusselement 14 bereitgestellt (siehe Figur 4). Danach erfolgt ein koaxiales Ausrichten des Leitungselements 12 und des Anschlusselements 14, wobei das Anschlusselement 14 und das Leitungselement 12 einander an dem einen Ende 16 des Leitungselements 12 axial überlappen.

Anschließend wird ein Umformer 18 bereitgestellt und mittels gepulster Magnetfelder beaufschlagt (nicht dargestellt), wodurch mittels des Umformers 18 das Leitungselement 12 an seinem einen Ende 16 umgeformt wird, so dass das Leitungselement 12 und das Anschlusselement 14 stoffschlüssig und formschlüssig miteinander verbunden werden (siehe Figur 5).

Dabei umgibt der Umformer 18 im überlappenden Bereich das Leitungselement 12 und des Anschlusselements 14 nach radial außen und wird beim Beaufschlagen mittels gepulster Magnetfelder radial derart komprimiert, dass das Leitungselement 12 und das Anschlusselement 14 formschlüssig und stoffschlüssig miteinander verbunden werden (siehe Figur 4 Darstellung H). Der Umformer 18 kann an der Fluidleitung 10 verbleiben.

Zeitgleich oder zeitversetzt kann ein Fügen des Leitungselements 12 mit dem Anschlusselement 14' erfolgen. Der Fügevorgang verläuft analog wie voranstehend beschrieben, wobei der Umformer 18' durch Beaufschlagen mittels gepulster Magnetfelder radial derart komprimiert wird, dass das Leitungselement 12 und das Anschlusselement 14' stoffschlüssig miteinander verbunden werden (siehe Figur 5 Darstellung G).
Der Umformer 18' kann an der Fluidleitung 10 verbleiben.

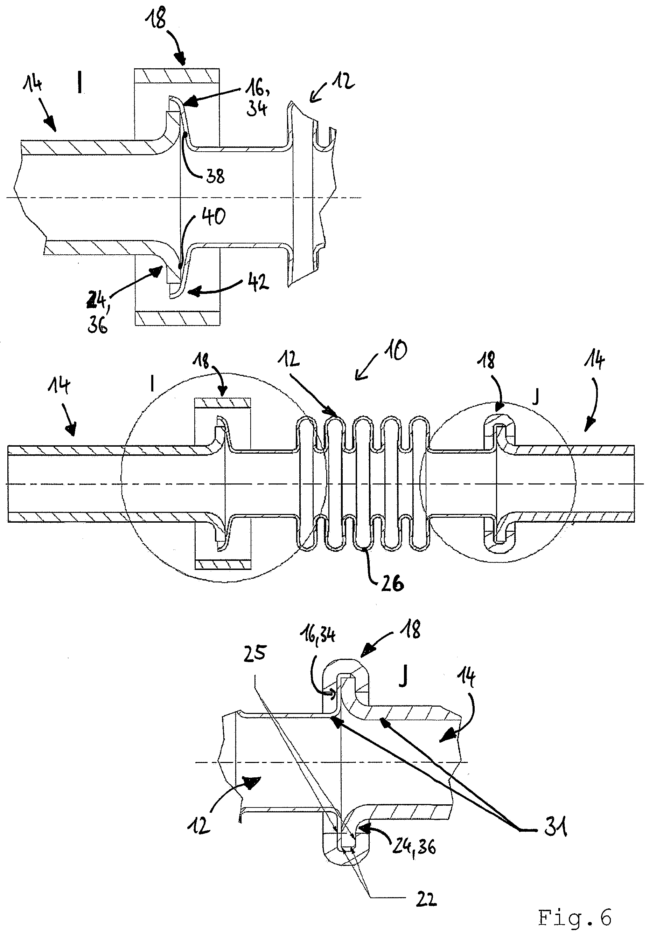

Die Figur 6 zeigt eine weitere Ausgestaltungsmöglichkeit der Fluidleitung 10, wobei die Fluidleitung 10 im unverbundenen Zustand (Darstellung I) und im verbundenen Zustand gezeigt ist (Darstellung J).

Die Fluidleitung 10 weist ein fluidführendes Leitungselement 12 und ein fluidführendes und koaxial zum Leitungselement 12 ausgerichtetes Anschlusselement 14 auf. Das Leitungselement 12 weist ein Ende 16 auf, an dem sich das Leitungselement 12 und das Anschlusselement 14 axial überlappen. Das Leitungselement 12 ist an dem einen Ende 16 durch einen mittels gepulster Magnetfelder beaufschlagten Umformer 18 derart umgeformt, dass das Leitungselement 12 und das Anschlusselement 14 an dem einen Ende 16 formschlüssig und stoffschlüssig verbunden sind.

Das Leitungselement 12 und das Anschlusselement 14 weisen an den einander zugewandten Enden 16, 24 jeweils einen sich flanschartig nach radial außen erstreckenden Endabschnitt 34, 36 auf. Der Endabschnitt 34 des Anschlusselements 14 weist einen relativ zum Endabschnitt 36 radial vorstehenden Abschnitt 42 auf (siehe Darstellung I). Das Leitungselement 12 und das Anschlusselement 14 sind an den Endabschnitten 34, 36 stoffschlüssig verbunden (stoffschlüssige Fügezone 22; siehe Darstellung J). Die stoffschlüssige Fügezone 22 befindet sich an der Innenfläche des (umgeformten) vorstehenden Abschnitts 42 und der radialen Außenfläche des Endabschnitts 36.

Der Umformer 18 umgibt das Leitungselement 12 und das Anschlusselement 14 an dem einen Ende 16 axial abschnittsweise nach radial außen, insbesondere an den Endabschnitten 34, 36, und zwar derart, dass das Leitungselement 12 und das Anschlusselement 14 mittels des Umformers 18 aneinander befestigt sind. Der Umformer 18 ist durch Beaufschlagen mittels gepulster Magnetfelder umgeformt, so dass dieser einen U-förmigen oder V-förmigen Querschnitt aufweist, der die flanschartigen Endabschnitte 34, 36 umgreift. Die Innenfläche des Umformers 18 liegt an den flanschartigen Endabschnitten 34, 36 an, wobei eine formschlüssige Verbindung 25 gebildet ist (siehe Darstellung J).

Das Leitungselement 12 ist zumindest abschnittsweise gewellt ausgebildet und weist Balgwellungen 26 auf. Das Leitungselement 12 ist als Balg oder Wellschlauch ausgebildet. Das Anschlusselement 14 ist als Rohrleitung ausgebildet. Die Fluidleitung 10 bildet eine CO2-Leitung aus.

Das Verfahren zur Herstellung einer Fluidleitung läuft folgendermaßen ab:
Zunächst wird ein fluidführendes Leitungselement 12 und ein fluidführendes Anschlusselement 14 bereitgestellt und das Leitungselement 12 und das Anschlusselement 14 werden koaxial zueinander ausgerichtet, wobei das Anschlusselement 14 zu einem Ende 16 des Leitungselements 12 benachbart ist. Dabei liegen das Leitungselement 12 und das Anschlusselement 14 mit den Stirnflächen 38, 40 aneinander an und der vorstehende Abschnitt 42 überlappt den Endabschnitt 36 des Anschlusselements 14 axial.

Anschließend wird ein Umformer 18 bereitgestellt, der im Ausgangszustand hülsenförmig ausgebildet ist (siehe Darstellung I). Der Umformer 18 wird mittels gepulster Magnetfelder beaufschlagt (nicht dargestellt), so dass das Leitungselement 12 an seinem einen Ende 16 umgeformt wird, wobei das Leitungselements 12 und das Anschlusselement 14 formschlüssig und stoffschlüssig verbunden werden.

Der Umformer 18 umgibt das Leitungselement 12 und das Anschlusselement 14 an den Endabschnitten 34, 36 nach radial außen und wird beim Beaufschlagen mittels gepulster Magnetfelder radial komprimiert, wobei sich der Umformer 18 jeweils endseitig nach radial innen faltet, so dass dieser einen U-förmigen Querschnitt annimmt (siehe Darstellung J).

Durch diesen Umformvorgang werden das Leitungselement 12 und das Anschlusselement 14 formschlüssig und stoffschlüssig verbunden. Dabei bildet sich zwischen der Innenfläche des vorstehenden Abschnitts 42 und der radialen Außenfläche des Endabschnitts 36 des Anschlusselements 14 eine stoffschlüssige Fügezone 22 aus. Zudem bildet sich zwischen der Innenfläche des Umformers 18 und den Endabschnitten 34, 36 eine formschlüssige Verbindung 25 aus.

Der Umformer 18 ist als ringförmiges oder hülsenförmiges Treiberelement (Treiberring) ausgebildet. Der Umformer 18 wird beim Beaufschlagen mittels gepulster Magnetfelder umgeformt, nämlich radial komprimiert, wobei dieser das Leitungselement 12 an seinem Endabschnitt 34 umformt und selbst umgeformt wird, so dass der Umformer 18 einen U-förmigen Querschnitt annimmt und am Bauteil verbleibt. Während des Fügevorgangs können das Leitungselement 12 und das Anschlusselement 14 am Innenumfang (Pfeile 31) mittels einer entsprechenden Abstützung abgestützt werden (Abstützung nicht dargestellt).

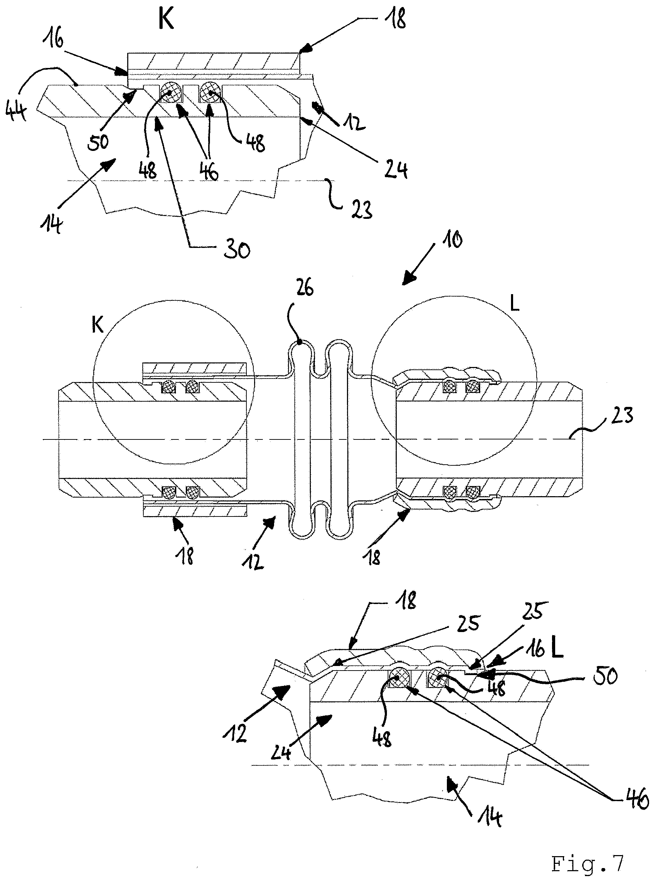

Figur 7 zeigt eine weitere Ausgestaltungsmöglichkeit der Fluidleitung 10, wobei die Fluidleitung 10 im unverbundenen Zustand (Darstellung K) und im verbundenen Zustand gezeigt ist (Darstellung L).

Die Fluidleitung 10 weist ein fluidführendes Leitungselement 12 und ein koaxial zum Leitungselement 12 ausgerichtetes Anschlusselement 14 auf, wobei das Leitungselement 12 ein Ende 16 aufweist, an dem sich das Leitungselement 12 und das Anschlusselement 14 axial überlappen (siehe Darstellungen K und L).

Das Leitungselement 12 ist an dem einen Ende 16 durch einen mittels gepulster Magnetfelder beaufschlagten Umformer 18 derart umgeformt, dass das Leitungselement 12 und das Anschlusselement 14 an dem einen Ende 16 formschlüssig miteinander verbunden sind.

Der Umformer 18 umgibt das Leitungselement 12 das Anschlusselement 14 an dem einen Ende 16 axial abschnittsweise nach radial außen, und zwar derart, dass das Leitungselement 12 und das Anschlusselement 14 mittels des Umformers 18 formschlüssig aneinander befestigt sind. Der Umformer 18 ist als hülsenförmiges oder ringförmiges Treiberelement ausgebildet (z.B. Treiberring), welches als Fügepartner an der Fluidleitung 10 verbleibt.

Das Leitungselement 12 ist zumindest abschnittsweise gewellt ausgebildet und weist Balgwellungen 26 auf. Das Anschlusselement 14 ist an seinem dem Leitungselement 12 zugewandten Ende 24 zum Ende 24 hin konisch verjüngt. Zudem weist das Anschlusselement 14 an seiner Außenfläche 44 zwei umlaufende Vertiefungen 46 auf, in denen Dichtelemente 48 (Dichtringe oder O-Ringe) angeordnet sind. Zudem weist das Anschlusselement 14 an seiner Außenfläche 44 eine weitere insbesondere umlaufende Vertiefung 50 auf, in die das Anschlusselement 14 und ggf. auch der Umformer 18 eingreift. Das Leitungselement 12 ist als Balg oder Wellschlauch ausgebildet. Das Anschlusselement 14 ist als Anschlussende ausgebildet. Die Fluidleitung 10 bildet einen Solarverbinder aus.

Das Verfahren zur Herstellung einer Fluidleitung 10 läuft folgendermaßen ab:
Zunächst wird ein fluidführendes Leitungselement 12 und ein fluidführendes Anschlusselement 14 bereitgestellt. Das Leitungselement 12 und das Anschlusselement 14 werden koaxial ausgerichtet, wobei sich das Leitungselement 12 und das Anschlusselement 14 an dem einen Ende 16 axial überlappen (siehe Darstellung K).
Anschließend wird ein Umformer 18 bereitgestellt und mittels gepulster Magnetfelder beaufschlagt. Dadurch wird das Leitungselement an seinem einen Ende 16 umgeformt, und zwar derart, dass das Leitungselement 12 und das Anschlusselement 14 formschlüssig verbunden werden.

Der Umformer 18 umgibt das Leitungselement 12 und das Anschlusselement 14 nach radial außen und wird beim Beaufschlagen mittels gepulster Magnetfelder radial derart komprimiert, dass das Leitungselement 12 und das Anschlusselement 14 formschlüssig verbunden werden.

Dabei wirkt der Umformer 18 als Treiberelement, der das Leitungselement 12 an dem einen Ende 16 radial komprimiert, so dass sich das Leitungselement 12 mittels des Umformers 18 an die Außenkontur des Anschlusselements 14 anschmiegt. Dadurch entstehen formschlüssige Verbindungen 25. So wird durch Anliegen oder Eingreifen des Leitungselements 12 an der weiteren Vertiefung 50 und an der konischen Verjüngung am Ende 24 des Anschlusselements 14 jeweils ein Formschluss 25 ausgebildet. Die Dichtringe 48 werden komprimiert und dichten die Verbindung von Leitungselement 12 und Anschlusselement 14.

Das Anschlusselement 14 kann während des Fügevorgangs abgestützt werden (Pfeil 30), bspw. durch eine entsprechende Abstützung (nicht dargestellt).

## Patentansprüche

1. Fluidleitung (10) mit einem fluidführenden Leitungselement (12) und mindestens einem fluidführenden, vorzugsweise koaxial zum Leitungselement ausgerichteten Anschlusselement (14), wobei das Leitungselement (12) ein Ende (16) aufweist, zu dem das Anschlusselement (14) axial benachbart ist oder an dem sich das Leitungselement (12) und das Anschlusselement (14) axial überlappen, **dadurch gekennzeichnet, dass** das Leitungselement (12) an dem einen Ende (16) durch einen mittels gepulster Magnetfelder beaufschlagten Umformer (18) derart umgeformt ist, insbesondere beschleunigt und mit dem Anschlusselement (14) derart zum Aufprall gebracht ist, dass das Leitungselement (12) und das Anschlusselement (14) an dem einen Ende (16) formschlüssig und/oder stoffschlüssig verbunden sind.

2. Fluidleitung (10) nach Anspruch 1, **dadurch gekennzeichnet, dass** das Leitungselement (12) zumindest abschnittsweise gewellt ausgebildet ist.

3. Fluidleitung (10) nach Anspruch 1 oder 2, **dadurch gekennzeichnet, dass** sich das Anschlusselement (12) an seinem dem Leitungselement (14) zugewandten Ende (24) zum Ende (24) hin insbesondere konisch verjüngt und/oder dass das Anschlusselement (14) an seiner Außenfläche (44) eine oder mehrere, insbesondere umlaufende, Vertiefungen (46, 50) aufweist.

4. Fluidleitung (10) nach einem der voranstehenden Ansprüche, **dadurch gekennzeichnet, dass** das Anschlusselement (14) aus Gusseisen mit Kugelgrafit (GJS), Stahl, Stahlguss, Nichteisenmetall, rostfreiem Stahl (Edelstahl), Aluminium oder Kunststoff ausgebildet ist und/oder dass das Leitungselement (12) aus rostfreiem Stahl (Edelstahl), Aluminium oder Nichteisenmetall ausgebildet ist und/oder dass der Umformer (18) aus Aluminium, Kupfer oder Stahl ausgebildet ist.

5. Fluidleitung (10) nach einem der voranstehenden Ansprüche, **dadurch gekennzeichnet, dass** das Anschlusselement (14) und das Leitungselement (12) an den einander zugewandten Enden (16, 24) jeweils einen sich insbesondere flanschartig nach radial außen erstreckenden Endabschnitt (34, 36) aufweisen, vorzugsweise wobei das Anschlusselement (14) und das Leitungselement (12) insbesondere an den Endabschnitten (34, 36) stoffschlüssig verbunden sind.

6. Fluidleitung (10) nach einem der voranstehenden Ansprüche, **dadurch gekennzeichnet, dass** der Umformer (18) das Leitungselement (12) und das Anschlusselement (14) an dem einen Ende (16) zumindest teilweise nach radial außen derart umgibt, dass das Leitungselement (12) und das Anschlusselement (14) mittels des Umformers (18) aneinander befestigt sind.

7. Fluidleitung (10) nach einem der voranstehenden Ansprüche, **dadurch gekennzeichnet, dass** das Leitungselement (12) als Rohrleitung oder Balg ausgebildet ist und/oder dass das Anschlusselement (14) als Anschlussteil, Anschlussende oder als Rohrleitung ausgebildet ist.

8. Fluidleitung (10) nach einem der voranstehenden Ansprüche, **dadurch gekennzeichnet, dass** das Leitungselement (12) das Anschlusselement (14) axial abschnittsweise nach radial außen umgibt und/oder dass der Umformer (18) axial oder radial auf das Leitungselement (12) wirkt.

9. Verfahren zur Herstellung einer Fluidleitung (10), mit folgenden Schritten:
- Bereitstellen eines fluidführenden Leitungselements (12) und eines fluidführenden Anschlusselements (14),
- Ausrichten, insbesondere koaxiales Ausrichten, des Leitungselements (12) und des Anschlusselements (14), wobei das Anschlusselement (14) zu einem Ende (16) des Leitungselements (12) benachbart ist oder sich das Anschlusselement (14) und das Leitungselement (12) an dem einen Ende (16) axial überlappen,
- **gekennzeichnet durch** Bereitstellen eines Umformers (18) und Beaufschlagen des Umformers (18) mittels gepulster Magnetfelder, so dass das Leitungselement (12) oder das Anschlusselement (14) derart verlagert wird und/oder das Leitungselement (12) an seinem einen Ende (16) derart umgeformt wird, dass das Leitungselement (12) und das Anschlusselement (14) formschlüssig und/oder stoffschlüssig verbunden werden.

10. Verfahren nach Anspruch 9, **dadurch gekennzeichnet, dass** der Umformer (18) das Leitungselement (12) und/oder das Anschlusselement (14) nach radial außen umgibt und beim Beaufschlagen mittels gepulster Magnetfelder radial derart komprimiert wird, dass das Leitungselement (12) und das Anschlusselement (14) formschlüssig und/oder stoffschlüssig miteinander verbunden werden.

11. Verfahren nach Anspruch 9, **dadurch gekennzeichnet, dass** der Umformer (18) das Leitungselement (12) und/oder das Anschlusselement (14) zumindest teilweise nach radial außen umgibt und beim Beaufschlagen mittels gepulster Magnetfelder axial derart verlagert wird, dass das Leitungselement (12) und das Anschlusselement (14) an ihren einander zugewandten Enden (16, 24) in Kontakt oder in axiale Überlappung gebracht werden, so dass das Leitungselement (12) und das Anschlusselement (14) formschlüssig und/oder stoffschlüssig miteinander verbunden werden.

12. Verfahren nach Anspruch 11, **dadurch gekennzeichnet, dass** der Umformer (18) das Leitungselement (12) oder das Anschlusselement (14) umgreift, insbesondere hintergreift, und bei der axialen Verlagerung des Umformers (18) mitnimmt, so dass das Anschlusselement (14) und das Leitungselement (12) axial in Kontakt gebracht oder aufeinander geschoben werden.
